# EUROPEAN PATENT SPECIFICATION

(11) **EP 2 305 473 B1**
(45) Date of publication and mention of the grant of the patent: **21.11.2012**
(21) Application number: 10008238.7
(22) Date of filing: 06.08.2010
(51) Int. Cl.: B41J 2/16, B41J 2/175

(54) **Manufacturing method of liquid discharge head**
Herstellungsverfahren für einen Flüssigkeitsausstoßkopf
Procédé de fabrication de tête à décharge liquide

(30) Priority: 18.09.2009 JP 2009216911
(43) Date of publication of application: 06.04.2011
(73) Proprietor: Canon Kabushiki Kaisha, Tokyo (JP)
(72) Inventor: Sato, Motoaki, Tokyo (JP); Miyagawa, Masashi, Tokyo (JP); Hattori, Shozo, Tokyo (JP)
(74) Representative: Weser, Thilo

(56) References cited:
- JP-A- 1 294 048
- US-A1- 2002 118 254
- US-A1- 2007 019 044
- US-A1- 2007 229 594

## Description

### BACKGROUND OF THE INVENTION

### Field of the Invention

The present invention relates to a manufacturing method of a liquid discharge head for discharging liquid, and more particularly, to a manufacturing method of an ink jet recording head for performing recording by discharging ink to a recording medium.

### Description of the Related Art

As a representative example of a liquid discharge head for discharging liquid, there is an ink jet recording head employed by an ink jet recording apparatus. Manufacturing method thereof are disclosed in Japanese Patent Application Laid-Open No. 2009-061710 and US 2007/0019044 A1. These methods comprise the following.

First, a recording element substrate provided with an energy generating element for generating energy used to discharge ink and an ink discharge port is prepared. Next, an adhesive is applied preliminarily at a predetermined position on the recording element substrate. Next, after aligning an ink supply member made of resin molding for supplying ink to the recording element substrate with the recording element substrate, the recording element substrate and the ink supply member which is a support member of the recording element substrate are adhered using the adhesive. In addition, the adhesive is precured by UV light and is then completely cured by thermal curing.

However, since the coefficients of linear expansion of the recording element substrate and the ink supply member are different, as the both sides are heated by heat when curing the adhesive, they expand at different rates until the adhesive is completely cured and thus relative positioning therebetween is fixed. Therefore, there may be a case where the recording element substrate and the ink supply member are not adhered at a desired relative positioning. In this case, when the ink jet recording head is mounted in a printer machine, positioning of a discharge port of the machine which is set in advance and positioning of a discharge port which is actually fixed are different, so that there is a concern that ink droplets do not land in desired positions and this affects printing quality.

### SUMMARY OF THE INVENTION

An object of the invention is to provide a manufacturing method of a liquid discharge head capable of obtaining a high yield of a liquid discharge head having a liquid supply member and a recording element substrate fixed thereto with higher precision than the related art.

According to an example of the invention, there is provided the manufacturing method of a liquid discharge head according to claim 1, capable of obtaining a high yield of the liquid discharge head having the liquid supply member and the recording element substrate fixed thereto with high precision. The other claims relate to further developments.

Further features of the present invention will become apparent from the following description of exemplary embodiments with reference to the attached drawings.

### BRIEF DESCRIPTION OF THE DRAWINGS

FIG. 1 is a schematic view for describing a configuration example of an ink jet recording head manufactured according to an embodiment of the invention.

FIG. 2 is a schematic view for describing the configuration example (an integrated ink supply body, a recording element substrate) of the ink jet recording head manufactured according to the embodiment of the invention.

FIGS. 3A and 3B are schematic views for describing a method of performing adhesive curing using a xenon flash lamp.

FIG. 4 is a graph illustrating a relationship of absorption of light of a silicon plate with wavelength.

### DESCRIPTION OF THE EMBODIMENTS

Preferred embodiments of the present invention will now be described in detail in accordance with the accompanying drawings. In addition, in the following description, for an application example of the invention, an ink jet recording head is exemplified. However, the scope of application of the invention is not limited thereto, and may be applied to a liquid discharge head for the purpose of manufacturing of a biochip or printing of an electronic circuit. As the liquid discharge head, as well as the ink jet recording head, for example, there is a head for manufacturing a color filter.

Embodiment 1

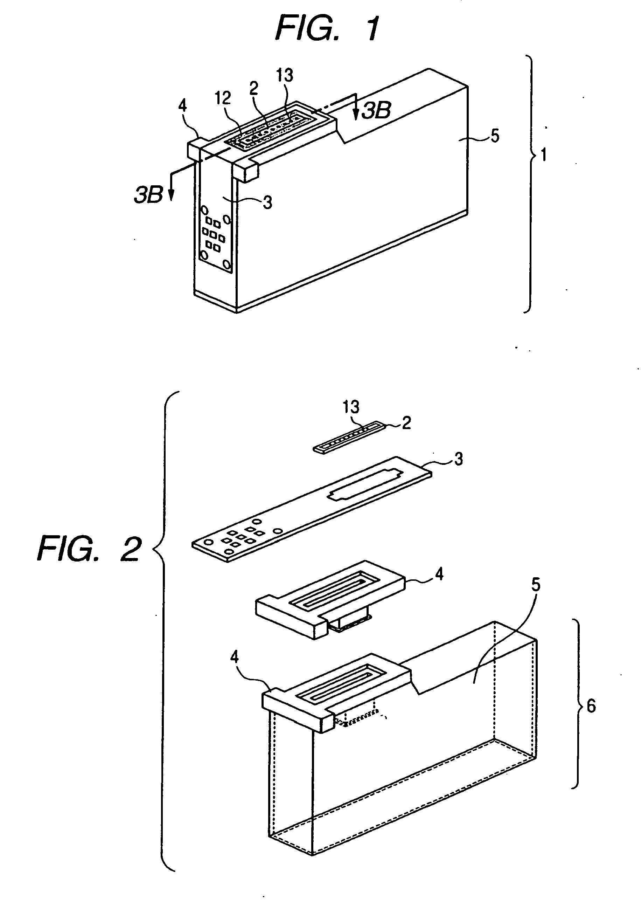

FIG. 1 is a schematic view for describing a configuration of an ink jet recording head according to this embodiment. The ink jet recording head 1 according to this embodiment includes a recording element substrate 2, an ink supply member 5, an electrical wiring tape 3, and a support member 4 for supporting the recording element substrate. A periphery of the recording element substrate is sealed with a sealant 12. The recording element substrate 2 has a discharge port 13 for discharging ink. The ink supply member supplies ink to the recording element substrate 2 and stores the ink to be discharged. The support member 4 includes an ink passage through which the ink is supplied to the recording element substrate 2 from the ink supply member 5, the ink passage being interposed between the recording element substrate 2 and the ink supply member 5, and has a joining surface for supporting and fixing at least the recording element substrate 2. Here, in this embodiment, the support member 4 is formed integrally with the ink supply member 5 so as to constitute an integrated ink supply body 6. In addition, in FIG. 2, for convenience, the support member 4 separated from the ink supply member, and the integrated ink supply body 6 formed by integrating the support member 4 and the ink supply member 5 with each other are both illustrated. In addition, according to the invention, the support member 4 may be considered as a part of the ink supply member. Whether the support member 4 is considered as a part of the ink supply member or as a member separate from the ink supply member is only a difference in terms of expression.

The material of the support member 4 for forming a supporting part of the recording element substrate may be a material with the same ink resistance as the ink supply member 5.

In addition, since the support member 4 has a surface to be adhered to the recording element substrate 2 and thus may have excellent planarity. Moreover, the support member 4 may have excellent in its ability to be attached to the main body. Further, since the support member 4 determines a positional relationship from the paper surface and the head, the support member 4 may have excellent dimensional precision and stiffness.

Examples of the material that can be used for the support member 4 include resin, alumina, and metal.

The resin used for the support member 4 is not particularly limited. However, any of a general-purpose engineering plastic and a super engineering plastic may be employed. Since the support member 4 is a member accompanied with contact with the ink liquid, the support member 4 can be alkali resistant and heat resistant. Since ink jet products are the result of mass production and an expendable supplies business, the general-purpose engineering plastic may be used. There, as the general-purpose engineering plastic, for example, candidates include a homopolymer such as polystyrene, an acrylic resin, HIPS (high impact (impact-resistant) polystyrene), PP (polypropylene), PE (polyethylene), nylon, and PSF (poly sulfone), or a polymer blend of the resins, and a compound such as a polymer alloy.

In addition, the support member 4 has the liquid passage (ink passage) and contacts the ink liquid. Accordingly, the material of the support member 4 may be a material from which organic or inorganic components are not extracted into the ink liquid due to the contact with the ink liquid and has a high temperature limit and good injection moldability. From this point of view, the material of the support member 4 may be a modified PPE or a polymer alloy including a modified PPE and PPS.

In addition, as a filler added to the support member 4, for example, glass filler which is an inorganic filler, a carbon filler, silica, alumina, mica, and talc can be used. The filler is not particularly limited to them and any of them may be used as long as it lowers the coefficient of linear expansion of the resin. Filler with a spherical shape may be used. Due to the spherical filler, the filler can be filled in the modified PPE at a high content. In addition, abrasion of a material contact part of the apparatus which may occur during kneading and molding processes can be reduced, thereby further solving anisotropic characteristics of the coefficient of linear expansion.

When the filler content of the polymer alloy composition is set to be equal to or greater than 50 mass%, very strong shear force may be applied under a high temperature during the kneading. As an apparatus capable of performing such kneading, for example, an open roll continuous extruder "Kneadex" (product name, manufactured by Mitsui Mining Co., Ltd.) may be used. By supplying the modified PPE and the filler crushed by a centrifugal mill to the apparatus, the apparatus continues to operation until pellets are formed due to kneading.

Next, the generated pellets are poured into a die with a predetermined shape using a molding machine so as to be subjected to injection molding, thereby obtaining the support member 4. Here, when the filler content of the polymer alloy composition is equal to or greater than 50 mass%, since fluidity of the composition is low, a molding machine that can pour the polymer alloy composition at a high speed may be used, and particularly, a high-speed and high-pressure molding machine may be used as the molding machine. A typical molding machine has an injection speed of about 500 mm/sec, but a high-speed and high-pressure molding machine achieves an injection speed of about 1500 to 2000 mm/sec.

In addition, a molding temperature during the injection molding of the support member 4 may be equal to or less than 320 °C. When the molding temperature is equal to or less than 320 °C, decomposition of the resin component of the modified PPE does not occur, which is good. When the polymer alloy of PPE and polystyrene is used for the modified PPE, a die temperature during the injection molding may be equal to or less than 100 °C. By allowing the molding temperature to be equal to or lower than a glass-transition temperature (100 °C) of polystyrene which is a component of the modified PPE, deformation of molded products or degradation of planarity does not occur, which is good. For example, using the high-speed and high-pressure molding machine, in the die with the predetermined shape, injection molding may be performed at an injection speed of 1500 mm/sec, an injection pressure of 340 MPa, a molding temperature of 300°C, and a die temperature of 80 °C, thereby obtaining the support member 4.

In addition, the manufactured support member 4 may be fixed to the ink supply member by insert molding. For example, the molded support member 4 may be disposed within the die of the ink supply member, and the resin composition which is the ink supply member material is poured into the die, thereby performing the insert molding. Accordingly, the integrated ink supply body (integrated liquid supply body) formed by joining the supply member 4 to the ink supply member can be obtained. Otherwise, the support member 4 and the supply member may be subjected to two-color molding thereby obtaining the integrated liquid supply body.

The recording element substrate may have a configuration in which, for example, a heat-generation element needed for liquid discharge, a metal wiring pattern, and a liquid passage including a photosensitive resin are formed on a silicon substrate by a semiconductor process.

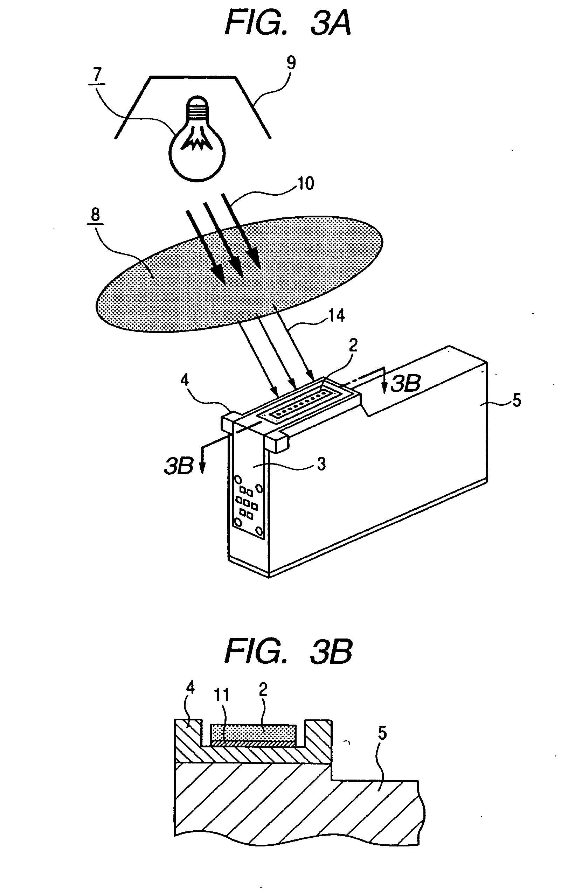

Here, a manufacturing method for obtaining the ink jet recording head illustrated in FIG. 1 will be described with reference to FIGS. 3A and 3B. FIGS. 3A and 3B are schematic views for describing an example of the manufacturing method of the liquid discharge head according to the invention. FIG. 3B illustrates a part of a cross-section of the ink jet recording head taken along the line 3B-3B of FIGS. 1 and 3A perpendicularly to the recording element substrate.

In order to connect the recording element substrate 2 to the integrated ink supply body, an adhesive 11 is applied to a predetermined area of the support member 4 to which the recording element substrate 2 is to be adhered to obtain a state as illustrated in FIG. 3B, and as illustrated in FIG. 3A, light including ultraviolet and infrared rays is emitted from a light source 7. Then, a filter 8 made of a silicon plate absorbs a part of light, mainly, UV rays, and the infrared rays included in light 14 transmitting the silicon plate transmits the recording element substrate 2 and reaches the adhesive 11. The adhesive 11 is cured by being warmed by the incident infrared rays and being also heated by heat transferred to the adhesive 11 from the support member 4 heated by the incident infrared rays.

According to the invention, particularly, a short arc lamp or a long arc lamp among halogen lamps which apply momentarily high energy may be used as the light source 7. Particularly, a xenon flash lamp which is the long arc lamp can perform heating to a high temperature of 100 to 150 °C or higher within a time in an order of microseconds to several tens of microseconds. In addition, 0.01 to 5 mass% of an infrared ray absorbent (near infrared ray absorbent) may be added to the adhesive to increase absorbing efficiency of infrared rays, thereby selectively curing a material to be heated within a short time.

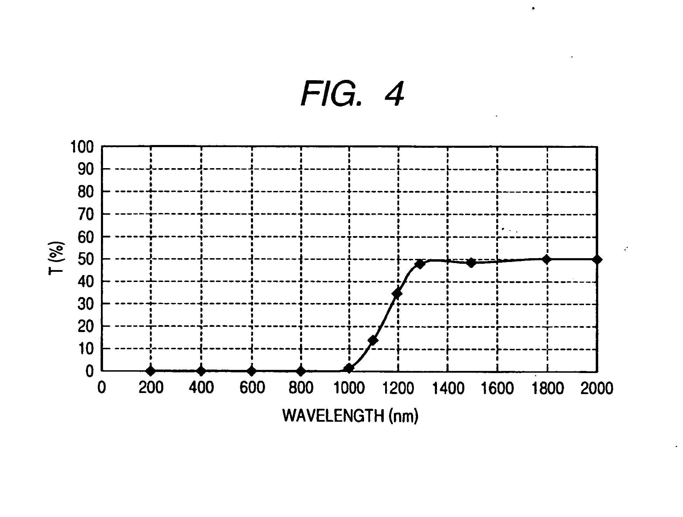

The filter 8 is formed from silicon. Silicon has an absorption curve as illustrated in FIG. 4 and absorbs light mainly in an ultraviolet region. FIG. 4 is a graph illustrating a relationship between absorption of a crystalline silicon plate (with a thickness of about 50 µm) and wavelength of light. Further, it is said that a wavelength of ultraviolet light is generally in the range of 10 to 400 nm. In addition, it is said that a wavelength of infrared light (hereinafter, referred to as infrared rays) is generally in the range of about 0.7 µm (or 770 nm) to 1 mm. As illustrated in FIG. 4, silicon absorbs light with a wavelength equal to or less than 1.3 µm, and particularly effectively absorbs light of equal to or less than 1.0 µm. Therefore, ultraviolet light (hereinafter, referred to ultraviolet rays) included in the irradiated light for accelerating the curing of the adhesive 11 can be effectively reduced. The filter 8 may be made of a silicon plate with a predetermined thickness. In addition, according to the invention, the recording element substrate 2 includes a silicon substrate (semiconductor substrate), and for example, a coated resin layer or an orifice plate is formed on the silicon substrate.

The temperature of the silicon substrate illuminated with light increases and thus the silicon substrate expands due to the temperature rise. Therefore, using silicon for the filter 8, parts of ultraviolet light and infrared light which are causes of the heating of silicon included in the recording element substrate can be effectively reduced, and infrared light for curing the adhesive is allowed to transmit, so that the adhesive containing infrared ray absorbent can be effectively heated.

The thickness of the silicon plate used as the filter 8 may be equal to or greater than 50 and equal to or smaller than 200 µm. In this range, the adhesive can be heated more selectively, and the increase in temperature of the recording element substrate is prevented, so that a difference between the liquid supply member and the recording element substrate in linear expansion and stress-strain caused by the temperature rise can be suppressed.

According to the invention, a process of curing with heat of infrared rays is used on the adhesive 11 made of the resin composition that is cured by heat. Using this method, adhesion is achieved within a short time, so that thermal expansion of the support member 4 and the recording element substrate 2 made of silicon caused by the heat transfer to the adhesive can be reduced. A delay-curing type UV cation epoxy adhesive is more effective for this purpose.

As the adhesive, those in which a photo-acid-generating agent (photo cationic polymerization initiator) receives light energy and generates acid so as to be cured may be used. Those that include epoxy, oxetane, and vinyl ether may be employed as resins. For example, an epoxy UV cationic adhesive (product name, "KR-827", manufactured by ADEKA), an epoxy UV cationic adhesive (product name, "KR-826", manufactured by ADEKA), and an epoxy UV cationic adhesive (product name, "KR-820", manufactured by ADEKA) may be employed.

Moreover, by allowing the adhesive 11 to include the infrared ray absorbent, the absorbing efficiency of the infrared light (infrared rays) is increased such that the adhesive can be cured within a short time. In addition, when an adhesive that is cured by an ion polymerization reaction mechanism is used as the adhesive, adhesion is enabled within a short time. As the adhesive that is cured by the ion polymerization reaction mechanism, for example, a UV cation epoxy adhesive can be employed, and from among UV cation epoxy adhesives, a delay-curing type UV cation epoxy adhesive is effective. Since the UV cation epoxy adhesive is cured by the ion polymerization reaction mechanism, the curing is achieved rapidly at a predetermined temperature which allows adhesion within a short time.

Content of the infrared ray absorbent (including the near infrared ray absorbent) may be in the range of 0.01 to 5 mass%. By allowing the content to be in this range, the absorbing efficiency of infrared rays can be enhanced.

Kinds of the infrared ray absorbent are not particularly limited as long as they are materials absorbing infrared light. In addition, due to the relationship of the absorption of the filter 8 made of silicon and the wavelength range, absorption of infrared light may be equal to or greater than 1.0 µm, and more particularly, absorption of infrared light equal to or greater than 1.3 µm is better. As the infrared ray absorbent, for example, there are a cyanine-based compound, a phthalocyanine-based compound, a naphthalocyanine-based compound, a naphthoquinone-based compound, an anthraquinone-based compound, an onium-based compound, nickel complexes, and diimoniums. Otherwise, one kind thereof or two or more kinds thereof may be mixed for use.

Moreover, as an organic infrared absorbent, specifically, there are "THX0113" (product name, manufactured by TOSCO), "NIR-IM1" or "NIR-AM1" (product name, manufactured by Nagase ChemteX Corporation), "IRG-2" or "IRG-3" (product name, manufactured by Nippon Kayaku Co.,Ltd.). As an inorganic infrared ray absorbent, a carbon compound may be used, graphitized carbon can also be used and graphitized carbon with an arithmetic particle diameter of equal to or less than 70 nm can be more desirably used.

As the light source 7, although not particularly limited, a light source emitting at least infrared light may be used. Particularly, a halogen lamp or a xenon lamp may be used which can apply high energy momentarily and thus shorten the curing reaction. Such a lamp emits infrared light and ultraviolet light. The lamp may emit visible light.

Infrared light (or infrared rays) is a kind of electromagnetic wave with a wavelength longer than visible light and indicates light in a wavelength range of about 1.0 µm from the end of visible light (about 770 nm). According to the invention, by irradiating the infrared light onto the adhesive, the curing reaction is accelerated. The infrared rays are classified by wavelengths into near infrared rays, middle infrared rays, and far infrared rays, and though the invention is related to kinds of the infrared ray absorbent to be included in the adhesive, near infrared rays and middle infrared rays with wide distribution ranges of rays are desired.

Particularly, infrared rays of long waves with a wavelength of equal to or greater than 1.3 µm can cure the adhesive hardly increasing the temperature of the recording element substrate 2 when the infrared rays of the wavelength range transmits the silicon substrate which constitutes at least a part of the recording element substrate 2. In addition, in order to prevent the recording element substrate 2 from being warmed up by the temperature rise of the adhesive, the light source of the infrared ray may be a very strong light source. In general, a lamp which can reach a predetermined temperature for tens to hundreds of milliseconds, such as, a halogen flash lamp or a xenon flash lamp can be very suitably used.

The invention is particularly effective in the case where the lamp with such a high light emission output is used. Ultraviolet rays 10 generated by the lamp as the light source 7 is reduced by the filter 8 thereby preventing the temperature rise of the recording element substrate 2.

Since the silicon plate has heat resistance at 800 °C or higher and high thermal conductivity, the silicon plate does not break even when absorbing infrared rays of the lamp with high output. In addition, since the silicon plate effectively absorbs the short wave infrared rays with wavelengths of equal to or less than 1.3 µm which are not desired to be irradiated onto the recording element substrate 2, the temperature rise of the recording element substrate 2 can be effectively prevented. By optimizing the output or emission conditions of the lamp, the thickness of the silicon plate, and an amount of the infrared ray absorbent to be added to the adhesive, it is possible to cure the adhesive and hardly heat the recording element substrate, and thus mounting precision can be significantly enhanced. In addition, when a method is performed in which an object to be illuminated is replaced as light is continuously irradiated by the lamp for a long time, it is necessary that care is taken over the temperature rise of the silicon plate. Accordingly, in a case where it is difficult to prepare a thick silicon substrate, a plurality of thin silicon plates may be prepared to replace the thin silicon plate at a time point when the temperature of the silicon plate is high. In addition, during the irradiation, cooling may be performed on the silicon plate using air cooling, water cooling, or other cooling tools.

According to the invention, by effectively reducing light of a wavelength which heats the silicon substrate included in the recording element substrate, the temperature of the adhesive reaches the curing temperature without the silicon substrate being heated. By directly exciting the infrared ray absorbent added to the adhesive, the adhesive can be cured without heating the recording element substrate.

In addition, as another example of the light source 7 used according to the invention, there is a halogen heater. The halogen heater has a spectrum distribution from an ultraviolet region to an infrared region, has high power density, and enables a rapid temperature rise in an object to be illuminated. In addition, a filament thereof has a long life-span due to the halogen cycle. Further, there is an advantage in that the output can be easily controlled by a thyristor. In addition, heating by a temperature of about 100 °C which is needed for adhesive curing can be achieved by an order of 1 millisecond to several seconds. There is the degree of freedom of the irradiation condition in terms of the application range of the adhesive, and whether uniform surface irradiation has to be performed in a mirror shape attached to a halogen heater depending on the application thickness or light has to be condensed into a focus type to heat only a needed part.

In order to continuously perform the processes in an ink jet recording head manufacturing line, the silicon filter at a high temperature may be cooled to about room temperature. There, a mechanism for accommodating and cooling a plurality of sheets of silicon filters and a mechanism for replacing the silicon filters after a predetermined number of heads is processed may be mounted in the apparatus.

Liquid Supply Member

The liquid supply member is a tank member for supplying liquid such as ink to the recording element substrate and may be made from organic or inorganic materials. The liquid supply member may have a material which does not swell, dissolve, or emit organic or inorganic materials even when the material is in contact with liquid such as ink. In addition, in terms of cost of raw materials and easiness of processing, a thermoplastic resin may be used. For example, general-purpose resins such as polypropylene or a modified PPE (modified polyethylene ether) may be mainly used for the liquid supply member. In order to enhance mechanical strength, silica or alumina may be used as filler.

Example 1

Hereinafter, Examples will be described.

In this example, a manufacturing method for obtaining the ink jet recording head illustrated in FIG. 1 will be described with reference to FIGS. 3A and 3B. The ink jet recording head 1 illustrated in FIG. 1 includes the recording element substrate 2, the electrical wiring tape 3, the support member 4, and the ink supply member 5. In addition, the support member 4 and the ink supply member are formed integrally with each other by insert molding to be used as the integrated ink supply body 6.

FIGS. 3A and 3B are perspective views for describing an example of a manufacturing method of a liquid discharge head according to the invention.

The modified PPE (product name "SE-1 X", manufactured by SABIC) as the polymer alloy which is the material of the support member 4 and spherical silica (product name "S-430", manufactured by Micron Technology) are kneaded at a mass proportion of 25:75 and pellets are generated. The obtained pellets were subjected to injection molding (an injection speed of 1,500 mm/sec, an injection pressure of 340 MPa, a molding temperature of 300 °C, and a die temperature of 80 °C) using a high-speed and high-pressure molding machine and a mold with a predetermined shape, thereby obtaining the support member 4.

The support member was disposed within the mold of the ink supply member in advance, and the modified PPE (PCN-2910 (product name, manufactured by SABIC)) is poured into the mold to perform the insert molding. Here, the injection speed was set to 70 mm/sec, the injection pressure was set to 150 MPa, the molding temperature was set to 300 °C, and the die temperature was set to 80 °C. Accordingly, the integrated ink supply body, which is configured by joining the support member and the ink supply member to each other, is obtained.

Here, FIG. 3B illustrates a part of a cross-section of the ink jet recording head taken along the line 3B-3B of FIG. 1 perpendicularly to the recording element substrate 2.

As illustrated in FIG. 3B, the adhesive 11 which is a resin composition was applied at an adhesion position between the support member 4 and the recording element substrate 2 in the manufactured integrated ink supply body to have a thickness of 10 µm after the curing. As the adhesive, a uniform mixture of an epoxy UV cation-based adhesive (product name "KR-827", manufactured by ADEKA) and 2.5 mass% of an infrared absorbent (product name "SDA 3610", manufactured by Tosco Corporation) was used.

In addition, UV light was irradiated onto the adhesive application surface at 120 mW/cm² for 3 seconds to adhere a recording element substrate for black color of the recording element substrate (with a width of 1.5 mm, a length of 19.06 mm, and a thickness of 0.3 mm) by a mounting device at a predetermined position of the support member (temporary joint).

Then, a silicon plate having a thickness of 120 µm as the filter 8 was provided between the halogen flash lamp light source (output 60 w) 7 and an integrated ink supply body unit in which the recording element substrate is mounted and then the halogen lamp light 10 was irradiated. Light 14 transmitting the filter 8 was irradiated onto the entire surface of the recording element substrate for 2.0 seconds to cure the adhesive 11.

An ink absorbing member, ink, and an ink supply member cover were assembled in the manufactured integrated ink supply body unit to configure an ink jet recording head that can perform printing.

Moreover, in this example, the ink jet recording head for black ink was described. However, the example is not limited thereto and can be applied to a color ink jet recording head.

Example 2

An ink jet recording head was manufactured under the same condition as that of Example 1 except that the thickness of the silicon substrate as the filter 8 to be provided between the light source and the object to be illuminated was 55 µm.

Example 3

An ink jet recording head was manufactured under the same condition as that of Example 1 except that the thickness of the silicon substrate as the filter 8 to be provided between the light source and the object to be illuminated was 195 µm.

Example 4

An ink jet recording head was manufactured under the same condition as that of Example 1 except that a content of the infrared absorbent in the adhesive was 1.2 mass%.

Example 5

An ink jet recording head was manufactured under the same condition as that of Example 1 except that a content of the infrared absorbent in the adhesive was 4.8 mass%.

Example 6

As the resin composition of the support member, PPS (product name: "B-060 P", manufactured by Tosoh Steel), a modified PPE (product name "SE-1 X", manufactured SABIC), and spherical silica (product name "S-430", manufactured by Micron Technology) were kneaded at a mass proportion of 8:12:80 so as to be generated into pellets. An ink jet recording head was manufactured under the same condition as that of Example 1 except that a content of the infrared absorbent (product name "Toka Black #3855", manufactured by Tokai Carbon) was 0.5 mass%.

Comparative Example 1

An ink jet recording head was manufactured under the same condition as that of Example 1 except that a silicon substrate as the filter 8 was not provided between the halogen flash lamp light source (output 60 w) and the integrated ink supply body unit.

Printing Image Quality after Physical Distribution Test

The ink jet recording heads manufactured in Examples 1 to 6 and Comparative Examples 1 to 4 were evaluated by performing printing inspections (image quality after test) after a temperature test described as follows and observing head nozzle surfaces. Heads were observed after being left in a packaged state in an environment of a temperature of 60 °C and a humidity of 20% for 360 hours.

Print qualities of the heads after the storage in the above-mentioned condition were compared using actual images.

Evaluation Reference

B: After the test, there was no warping or cracking. There was no color blending of ink colors due to peeling of the adhered surface. The print quality was good.

C: After the test, a slight warpage in the recording element substrate was seen. The print quality was in an acceptable range.

Adhesion Precision

A distance between the reference position of the integrated ink supply body and an alignment mark of the recording element substrate was measured before and after the adhesion.

Evaluation Reference

A: Warping of the recording element substrate in both longitudinal and lateral directions was less than 3 µm.

B: Warping of the recording element substrate in both longitudinal and lateral directions was equal to or greater than 3 µm and less than 5 µm.

C: Warping of the recording element substrate in both longitudinal and lateral directions was equal to or greater than 5 µm.

Longitudinal direction: a direction along 3B-3B

Lateral direction: a direction crossing 3B-3B

The results are shown in Table 1.

**[Table 1]**

| Evaluation Result | | | | | | | |
|---|---|---|---|---|---|---|---|
| | Example 1 | Example 2 | Example 3 | Example 4 | Example 5 | Example 6 | Comparative Example 1 |
| Modified PPE [mass%] | 25 | 25 | 25 | 25 | 25 | 12 | 25 |
| PPS [mass%] | - | - | - | - | - | 8 | - |
| Spherical Silica [mass%] | 75 | 75 | 75 | 75 | 75 | 80 | 75 |
| Silicon Substrate Thickness [µm] | 120 | 55 | 195 | 120 | 120 | 120 | 120 |
| Infrared Ray Absorbent [mass%] | 2.5 | 2.5 | 2.5 | 1.2 | 4.8 | 2.5 | 2.5 |
| Adhesion Precision | B | B | B | B | B | A | C |
| Image Quality after Physical Distribution Test | B | B | B | B | B | B | C |

## Claims

1. A manufacturing method of a liquid discharge head (1) which includes a discharge element substrate (2) consisting of silicon and having an energy generating element for generating energy for discharging liquid on one surface, and a support member (4) for supporting the discharge element substrate, the manufacturing method comprising:
providing a resin composition (11), which includes a resin and can be cured by heat, between the discharge element substrate and the support member so that the resin composition is in contact with both, a part of a rear surface of the discharge element substrate and the support member; and **characterized by**
irradiating light (10, 14), including at least ultraviolet rays and infrared rays, to cure the resin composition,
the light being irradiated onto the resin composition, from a side of the discharge element substrate, through a silicon plate (8).

2. The manufacturing method according to claim 1, wherein the silicon plate has a thickness of 50 to 200 µm.

3. The manufacturing method according to claim 1, wherein the resin composition includes a curable resin and a curing agent of the resin.

4. The manufacturing method according to claim 1, wherein the resin composition includes an infrared ray absorbent.

5. The manufacturing method according to claim 4, wherein the infrared ray absorbent is a cyanine-based compound, a phthalocyanine-based compound, a naphthalocyanine-based compound, a naphthoquinone-based compound, an anthraquinone-based compound, an onium-based compound, nickel complexes, or diimoniums.

6. The manufacturing method according to claim 1, wherein a light source (7) for emitting the light including at least ultraviolet rays and infrared rays is a xenon flash lamp or a halogen lamp.

7. The manufacturing method according to claim 1, wherein the support member is formed from a mixture of a modified polyethylene ether resin and a polyphenylene sulfide resin, and spherical silica.

8. The manufacturing method according to claim 1, wherein the support member is formed integrally with a liquid accommodation container for accommodating liquid used for discharge.

## Patentansprüche

1. Herstellungsverfahren für einen Flüssigkeitsaustragkopf (1), welcher ein aus Silicium bestehendes Austragselementsubstrat (2) beinhaltet und ein Energieerzeugungselement zwecks Energieerzeugung für einen Flüssigkeitsaustrag auf einer Fläche des Substrats aufweist, sowie ein Halterungsglied (4) zwecks Halterns des Austragselements an diesem Substrat,
wobei das Verfahren umfasst:
- Vorsehen einer Harzzusammensetzung (11), welche beinhaltet ein durch Wärme härtbares Harz, zwischen dem Austragselementsubstrat und dem Halterungsglied derart, dass sich die Harzzusammensetzung in Kontakt befindet mit sowohl einem Teil der rückseitigen Fläche des Austragselementsubstrats und dem Halterungsglied; und **gekennzeichnet durch**
- Bestrahlen mit Licht (10, 14), welches wenigstens Ultraviolettstrahlen und Infrarotstrahlen beinhaltet, um die Harzzusammensetzung zu härten, wobei
- das Licht aufgestrahlt wird auf die Harzzusammensetzung, und zwar **durch** eine Siliciumplatte (8) hindurch, von der Austragselementsubstratseite aus.

2. Verfahren nach Anspruch 1, wobei
die Siliciumplatte eine Dicke von 50 bis 200 µm hat.

3. Verfahren nach Anspruch 1, wobei
die Harzzusammensetzung ein härtbares Harz und ein Harzhärtungsmittel beinhaltet.

4. Verfahren nach Anspruch 1, wobei
die Harzzusammensetzung ein Infrarotstrahlungsabsorbens beinhaltet.

5. Verfahren nach Anspruch 4, wobei
das Infrarotstrahlungsabsorbens vorliegt als eine auf Cyanin basierende Verbindung, eine auf Phthalocyanin basierende Verbindung, eine auf Naphthalocyanin basierende Verbindung, eine auf Naphthochinon basierende Verbindung, eine auf Anthrachinon basierende Verbindung, eine auf Onium basierende Verbindung, Nickelkomplexe oder Diimoniumalze.

6. Verfahren nach Anspruch 1, wobei
eine Lichtquelle (7) zwecks Emission des Lichtes, welches wenigstens Ultraviolettstrahlung und Infrarotstrahlung beinhaltet, vorliegt als Xenonblitzlampe oder eine Halogenlampe.

7. Verfahren nach Anspruch 1, wobei
das Halterungsglied gebildet wird aus einer Mischung eines modifizierten Polyäthylenätherharzes und eines Polyphenylensulfidharzes, sowie sphärische Siliciumteilchen.

8. Verfahren nach Anspruch 1, wobei
das Halterungsglied hergestellt wird als integriertes Ganzes mit einem Flüssigkeitsaufnahmebehälter wie dieser zum Austrag jener Flüssigkeit benutzt wird.

## Revendications

1. Procédé pour la production d'une tête de déchargement de liquide (1) qui comprend un substrat d'élément de déchargement (2) consistant en silicium et comportant un élément engendrant de l'énergie pour engendrer de l'énergie pour le déchargement du liquide sur une surface, et un élément de support (4) pour porter le substrat d'élément de déchargement, le procédé de production comprenant les étapes consistant à :
fournir une composition de résine (11), qui comprend une résine et qui peut être durcie par la chaleur, entre le substrat d'élément de déchargement et l'élément de support de telle sorte que la composition de résine soit en contact avec à la fois une partie d'une surface postérieure du substrat d'élément de déchargement et l'élément de support ; et **caractérisé par**
l'irradiation avec de la lumière (10, 14), comprenant au moins des rayonnements ultraviolets et des rayonnements infrarouges, pour le durcissement de la composition de résine,
la lumière irradiant la surface de la composition de résine, d'un côté du substrat d'élément de déchargement, à travers une plaque de silicium (8).

2. Procédé de production suivant la revendication 1, dans lequel la plaque de silicium a une épaisseur de 50 à 200 µm.

3. Procédé de production suivant la revendication 1, dans lequel la composition de résine comprend une résine durcissable et un agent de durcissement de la résine.

4. Procédé de production suivant la revendication 1, dans lequel la composition de résine comprend un agent absorbant le rayonnement infrarouge.

5. Procédé de production suivant la revendication 4, dans lequel l'agent absorbant le rayonnement infrarouge est un composé à base de cyanine, un composé à base de phtalocyanine, un composé à base de naphtalocyanine, un composé à base de naphtoquinone, un composé à base d'anthraquinone, un composé à base d'onium, des complexes de nickel ou des diimoniums.

6. Procédé de production suivant la revendication 1, dans lequel une source de lumière (7) pour l'émission de la lumière comprenant au moins des rayonnements ultraviolets et des rayonnements infrarouges est une lampe éclair au xénon ou une lampe à halogène.

7. Procédé de production suivant la revendication 1, dans lequel l'élément de support est formé d'un mélange d'une résine d'éther de polyéthylène modifiée et d'une résine de sulfure de polyphénylène, et de silice sphérique.

8. Procédé de production suivant la revendication 1, dans lequel l'élément de support est formé de manière intégrale avec un récipient de réception de liquide pour recevoir le liquide utilisé pour le déchargement.
